# FASCICULE DE BREVET EUROPEEN

(11) **EP 2 882 069 B1**
(45) Date de publication et mention de la délivrance du brevet: **15.01.2020**
(21) Numéro de dépôt: 14187345.5
(22) Date de dépôt: 01.10.2014
(51) Int. Cl.: H02J 50/00

(54) **Système de conversion d'énergie, ensemble de rechargement par induction et procédés d'émission et de réception de données associés**
System zur Energieumwandlung, Einheit zum Wiederaufladen durch Induktion, und entsprechende Verfahren zum Senden und Empfangen von Daten
Energy conversion system, induction charging assembly and related data transmission and reception methods

(30) Priorité: 09.10.2013 FR 1359804
(43) Date de publication de la demande: 10.06.2015
(73) Titulaire: Schneider Electric Industries SAS, 92500 Rueil-Malmaison (FR)
(72) Inventeur: Herriot, Yann, 38050 Grenoble Cedex 09 (FR); Ladas, Dimitrios, 38050 Grenoble Cedex 09 (FR); Dorbais, Lionel, 38050 Grenoble Cedex 09 (FR)
(74) Mandataire: Lavoix

(56) Documents cités:
- US-A1- 2005 017 673
- US-A1- 2009 284 082
- US-A1- 2010 001 845
- US-A1- 2012 313 448
- US-A1- 2013 134 792
- US-B1- 6 750 560

## Description

La présente invention concerne un système de conversion d'énergie électrique, comprenant un module primaire et un module secondaire. Le module primaire comporte deux bornes d'entrée propres à recevoir un courant électrique, un enroulement primaire, et un condensateur primaire relié à l'enroulement primaire et aux bornes d'entrée. Le module secondaire comporte deux bornes de sortie, un enroulement secondaire, et un condensateur secondaire relié à l'enroulement secondaire et aux bornes de sortie. Un courant est propre à être induit dans l'enroulement secondaire lorsque l'enroulement primaire et l'enroulement secondaire sont couplés magnétiquement, le courant reçu entre les bornes d'entrée circulant à travers l'enroulement primaire.

L'invention concerne aussi un ensemble de rechargement par induction d'une batterie électrique, l'ensemble comprenant un dispositif de rechargement et un véhicule électrique, le véhicule électrique comportant la batterie électrique. L'ensemble de rechargement comprend un tel système de conversion d'énergie, le dispositif de rechargement comportant le module primaire, le véhicule électrique comportant le module secondaire, les bornes d'entrées étant propres à être connectées à une source d'alimentation électrique et les bornes de sortie étant propres à être connectées à la batterie électrique.

L'invention concerne également un procédé d'émission de données et un procédé de réception de données au sein d'un tel ensemble de rechargement par induction d'une batterie électrique.

On connait du document US 2010/0190436 A1 un système de conversion d'énergie électrique et un ensemble de rechargement du type précité. Le module primaire est connecté à un réseau d'alimentation électrique, et le module secondaire est connecté à la batterie électrique. La batterie électrique est propre à être rechargée lorsque l'enroulement primaire et l'enroulement secondaire sont couplés magnétiquement, par exemple lorsque le module primaire est intégré dans la chaussée et que le véhicule électrique comportant le module secondaire est situé au-dessus du module primaire. Préalablement au début du rechargement de la batterie électrique, il est en outre nécessaire d'effectuer un appairage du module primaire avec le module secondaire, c'est-à-dire de permettre au module primaire de détecter la présence du module secondaire, et inversement au module secondaire de détecter la présence du module primaire. Cet appairage est effectué à l'aide de deux modules additionnels de communication radioélectrique aptes à communiquer entre eux, un premier module additionnel étant connecté au module primaire et un deuxième module additionnel étant connecté au module secondaire.

US 2005/0017673 A1 décrit un système de conversion d'énergie électrique pour charger une batterie électrique.

Toutefois, de tels modules additionnels de communication radioélectrique sont coûteux et augmentent en outre l'encombrement d'un tel ensemble de rechargement par induction.

Le but de l'invention est donc de proposer un système de conversion d'énergie électrique, ainsi qu'un ensemble associé de rechargement par induction, moins coûteux et moins encombrants.

À cet effet, l'invention a pour objet un système de conversion d'énergie électrique selon la revendication 1.

Grâce à l'ajout de l'interrupteur secondaire selon l'invention, propre à commuter, de manière réversible, entre une première configuration dans laquelle le courant induit dans l'enroulement secondaire est propre à circuler jusqu'aux bornes de sortie, et une deuxième configuration dans laquelle ledit courant induit est propre à circuler en boucle fermée à travers l'enroulement secondaire et le condensateur secondaire sans être délivré aux bornes de sortie, il est possible d'effectuer l'appairage du module primaire avec le module secondaire en l'absence de modules additionnels de communication radioélectrique. En effet, comme cela sera décrit plus en détail par la suite, la deuxième configuration permet d'effectuer cet appairage, alors que la première configuration permet le rechargement de la batterie électrique.

Suivant d'autres aspects avantageux de l'invention, le système de conversion d'énergie électrique est selon l'une quelconque des revendications 2 à 7.

L'invention a également pour objet un ensemble de rechargement par induction selon la revendication 8.

L'invention a également pour objet un procédé d'émission de données selon la revendication 9.

L'invention a également pour objet un procédé de réception de données selon la revendication 10.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un ensemble de rechargement d'une batterie électrique, l'ensemble comprenant un dispositif de rechargement, un véhicule électrique et un système de conversion d'énergie électrique, le véhicule électrique comportant la batterie électrique,

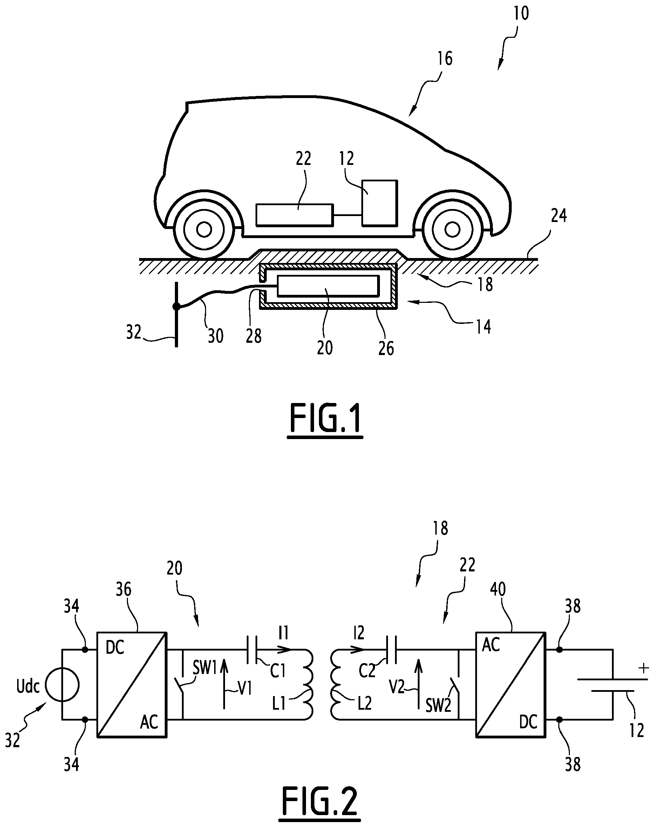

- la figure 2 est un schéma électrique du système de conversion d'énergie électrique de la figure 1, selon un premier mode de réalisation de l'invention, le système de conversion comprenant un module primaire et un module secondaire, le module secondaire comportant un interrupteur secondaire propre à commuter, de manière réversible, entre une première configuration dans laquelle un courant induit dans un enroulement secondaire est propre à circuler jusqu'à des bornes de sortie du système de conversion, et une deuxième configuration dans laquelle le courant induit est propre à circuler en boucle fermée à travers l'enroulement secondaire et un condensateur secondaire sans être délivré aux bornes de sortie,
- la figure 3 est un schéma électrique plus détaillé du système de conversion de la figure 2,
- la figure 4 est un organigramme des procédés d'émission et de réception de données selon l'invention,
- la figure 5 est un ensemble de courbes représentant l'intensité d'un courant circulant dans le module primaire, et la densité spectrale associée, lorsque l'interrupteur secondaire de la figure 2 est dans sa première configuration,
- la figure 6 est un ensemble de courbes représentant l'intensité du courant circulant dans le module primaire et la densité spectrale associée, ainsi que l'intensité d'un courant circulant dans le module secondaire et la densité spectrale associée, lorsque l'interrupteur secondaire de la figure 2 est dans sa deuxième configuration,
- la figure 7 est un ensemble de courbes représentant la puissance, l'intensité et la phase du courant circulant dans le module primaire, ainsi qu'un signal de commande de l'interrupteur secondaire, lors d'une transmission de données depuis le module secondaire vers le module primaire,
- la figure 8 est un ensemble de courbes représentant la puissance, l'intensité et la phase du courant circulant dans le module primaire, la puissance et l'intensité du courant circulant dans le module secondaire, ainsi que le signal de commande de l'interrupteur secondaire, lors d'un arrêt d'urgence du rechargement de la batterie électrique, sur requête du module secondaire, et
- les figures 9 à 11 sont des vues analogues à celle de la figure 2, selon des deuxième, troisième et respectivement quatrième modes de réalisation de l'invention.

Dans la suite de la description, l'expression « sensiblement égal à » s'entend comme une relation d'égalité à plus ou moins 5%.

Sur la figure 1, un ensemble 10 de rechargement par induction d'une batterie électrique 12 comprend un dispositif de rechargement par induction 14 et un véhicule électrique 16.

L'ensemble de rechargement par induction 10 comprend un système 18 de conversion d'énergie électrique, comportant un module primaire 20 et un module secondaire 22, le module primaire 20 étant compris dans le dispositif de rechargement par induction 14 et le module secondaire 22 étant compris dans le véhicule électrique 16.

La batterie 12 est connue en soi. La batterie 12 est, par exemple, une batterie au lithium, de préférence une batterie lithium-ion. En variante, la batterie 12 est une batterie nickel-chlorure de sodium, de type ZEBRA (de l'anglais *Zero Emission Battery Research Activities).*

Le dispositif de rechargement par induction 14 est de préférence destiné à être agencé dans la chaussée 24. Le dispositif de rechargement 14 comprend le module primaire 20 et un boîtier de protection 26 à l'intérieur duquel est disposé le module primaire 20. Le boîtier de protection 26 comporte un orifice 28 de passage d'une liaison électrique 30 de raccordement du module primaire 20 à un réseau électrique 32.

Le véhicule électrique 16 est connu en soi, et comprend la batterie électrique 12 et le module secondaire 22, le module secondaire 22 étant connecté électriquement à la batterie 12. Le véhicule électrique 16 est destiné à être positionné au-dessus du dispositif de rechargement 14 afin de recharger la batterie 12, comme représenté sur la figure 1.

Le système de conversion d'énergie électrique 18 est propre à convertir une énergie électrique en une autre énergie électrique. Il est propre à être relié au réseau électrique 32, d'une part, et à la batterie électrique 12, d'autre part.

Le système de conversion 18 est alors adapté pour convertir l'énergie électrique issue du réseau 32 en une autre énergie électrique délivrée à la batterie 12, ou de manière réversible, pour convertir une énergie électrique issue de la batterie 12 en une autre énergie électrique fournie au réseau 32.

Le système de conversion 18 est de préférence propre à convertir une énergie continue en une autre énergie continue, le réseau 32 étant alors un réseau continu.

Le module primaire 20 comprend deux bornes d'entrée 34 propres à recevoir un courant électrique, un enroulement primaire L1 et un condensateur primaire C1 relié à l'enroulement primaire L1 et aux bornes d'entrée 34, comme représenté sur la figure 2.

Lorsque le système de conversion 18 est adapté pour recevoir une énergie continue entre les bornes d'entrée 34, le module primaire 20 comporte un onduleur 36 connecté entre les bornes d'entrée 34 et l'enroulement primaire L1.

En complément, le module primaire 20 comprend en outre un interrupteur primaire SW1 relié électriquement au condensateur primaire C1 et à l'enroulement primaire L1, et des moyens, non représentés, de commande de l'interrupteur primaire SW1. L'interrupteur primaire SW1 est un interrupteur commandable connu en soi. L'interrupteur primaire SW1 est par exemple formé d'au moins un transistor, tel qu'un transistor MOSFET (de l'anglais *Métal Oxide Semiconductor Field Effect Transistor*) ou encore un transistor IGBT (de l'anglais *Insulated Gate Bipolar Transistor*)*.* En variante, l'interrupteur primaire SW1 est formé d'au moins un thyristor.

Le module secondaire 22 comprend deux bornes de sorties 38, un enroulement secondaire L2 et un condensateur secondaire C2 relié à l'enroulement secondaire L2 et aux bornes de sortie 38.

Lorsque le système de conversion 18 est adapté pour délivrer une énergie continue entre les bornes de sortie 38, le module secondaire 22 comporte un redresseur 40 connecté entre l'enroulement secondaire L2 et les bornes de sortie 38.

Un courant I2 est propre à être induit dans l'enroulement secondaire L2 lorsque l'enroulement primaire L1 et l'enroulement secondaire L2 sont couplés magnétiquement, par exemple lorsque le véhicule électrique 16 est positionné au-dessus du dispositif de rechargement 14, le courant reçu entre les bornes d'entrée 38 circulant à travers l'enroulement primaire L1.

Le module secondaire 22 comprend en outre, selon l'invention, un interrupteur secondaire SW2 relié électriquement au condensateur secondaire C2 et à l'enroulement secondaire L2, et des moyens, non représentés, de commande de l'interrupteur secondaire SW2. L'interrupteur secondaire SW2 est un interrupteur commandable connu en soi. L'interrupteur secondaire SW2 est par exemple formé d'au moins un transistor, tel qu'un transistor MOSFET ou encore un transistor IGBT. En variante, l'interrupteur secondaire SW2 est formé d'au moins un thyristor.

L'interrupteur secondaire SW2 est propre à commuter, de manière réversible, entre une première configuration dans laquelle le courant I2 induit dans l'enroulement secondaire L2 est propre à circuler jusqu'aux bornes de sortie 38, et une deuxième configuration dans laquelle ledit courant induit I2 est propre à circuler en boucle fermée à travers l'enroulement secondaire L2 et le condensateur secondaire C2 sans être délivré aux bornes de sortie 38.

En complément, un courant I1 est propre à être induit dans l'enroulement primaire L1 lorsque l'enroulement primaire L1 et l'enroulement secondaire L2 sont couplés magnétiquement et qu'un courant reçu entre les bornes de sortie 38 circule à travers l'enroulement secondaire L2.

L'interrupteur primaire SW1 est alors propre à commuter, de manière réversible, entre une troisième configuration dans laquelle le courant I1 induit dans l'enroulement primaire L1 est propre à circuler jusqu'aux bornes d'entrée 34, et une quatrième configuration dans laquelle ledit courant induit I1 est propre à circuler en boucle fermée à travers l'enroulement primaire L1 et le condensateur primaire C1 sans être délivré aux bornes d'entrée 34.

Les bornes d'entrées 34 sont propres à être connectées à une source d'alimentation électrique, telle que le réseau 32, et les bornes de sortie 38 sont propres à être connectées à la batterie électrique 12.

Dans l'exemple de réalisation de la figure 2 où le réseau 32 forme une source de tension, l'interrupteur primaire SW1 est connecté en parallèle, d'une part, de l'enroulement primaire L1 et du condensateur primaire C1 connectés en série, et d'autre part, des bornes d'entrée 34.

Lorsque le réseau 32 forme une source de tension continue propre à délivrer une tension continue notée Udc, l'interrupteur primaire SW1 est connecté en parallèle de l'onduleur 36 du côté de l'onduleur opposé au côté connecté aux bornes d'entrée 34.

Dans l'exemple de réalisation de la figure 2 où la charge, à savoir la batterie 12, est alimentée en tension, l'interrupteur secondaire SW2 est connecté en parallèle, d'une part, de l'enroulement secondaire L2 et du condensateur secondaire C2 connectés en série, et d'autre part, des bornes de sortie 38.

Lorsque la charge est alimentée en tension continue, l'interrupteur secondaire SW2 est connecté en parallèle du redresseur 40 du côté du redresseur opposé au côté connecté aux bornes de sortie 38.

Dans l'exemple de réalisation de la figure 2, la première configuration correspond à la position ouverte de l'interrupteur secondaire SW2, et la deuxième configuration correspond à la position fermée de l'interrupteur secondaire SW2.

Dans l'exemple de réalisation de la figure 2, la troisième configuration correspond à la position ouverte de l'interrupteur primaire SW1, et la quatrième configuration correspond à la position fermée de l'interrupteur primaire SW1.

Selon ce premier mode de réalisation, le système de conversion 18 présente un agencement appelé série-série, les condensateurs primaire C1 et secondaire C2 étant connectés en série de l'enroulement primaire L1 et respectivement de l'enroulement secondaire L2.

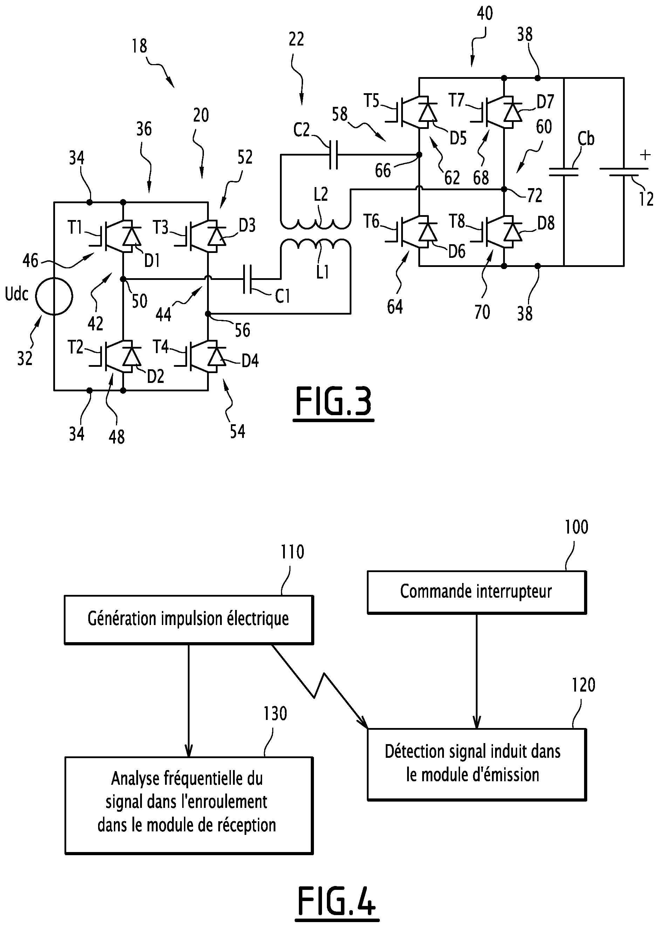

Sur la figure 3, représentant un schéma électrique détaillé du système de conversion 18, selon un agencement série-série identique à celui de la figure 2, l'onduleur 36 et le redresseur 40 comportent chacun un pont en H, comme connu en soi.

L'onduleur 36 comporte une première branche de commutation 42 et une deuxième branche de commutation 44, connectées en parallèle l'une de l'autre et entre les bornes d'entrée 34, la première branche de commutation 42 comportant un premier interrupteur 46 et un deuxième interrupteur 48 connectés en série entre les bornes d'entrée 34 et reliés entre eux par un premier point milieu 50, et la deuxième branche de commutation 44 comportant un troisième interrupteur 52 et un quatrième interrupteur 54 connectés en série entre les bornes d'entrée 34 et reliés entre eux par un deuxième point milieu 56.

Le condensateur primaire C1 et l'enroulement primaire L1 sont alors connectés en série entre le premier point milieu 50 et le deuxième point milieu 56.

Le redresseur 40 comporte une troisième branche de commutation 58 et une quatrième branche de commutation 60, connectées en parallèle l'une de l'autre et entre les bornes de sortie 38, la troisième branche de commutation 58 comportant un cinquième interrupteur 62 et un sixième interrupteur 64 connectés en série entre les bornes de sortie 38 et reliés entre eux par un troisième point milieu 66, la quatrième branche de commutation 60 comportant un septième interrupteur 68 et un huitième interrupteur 70 connectés en série entre les bornes de sortie 38 et reliés entre eux par un quatrième point milieu 72.

Le condensateur secondaire C2 et l'enroulement secondaire L2 sont alors connectés en série entre le troisième point milieu 66 et le quatrième point milieu 72.

Les premier 46, deuxième 48, troisième 52, quatrième 54, cinquième 62, sixième 64, septième 68 et huitième 70 interrupteurs sont, par exemple, formés chacun d'un transistor Ti et d'une diode Di connectée en antiparallèle du transistor Ti, où i est un indice entier compris entre 1 et 8 et correspondant au numéro de l'interrupteur respectif.

Dans l'exemple de réalisation de la figure 3, l'interrupteur primaire SW1 est formé par les interrupteurs 46, 48, 52, 54 de l'onduleur 36. La fermeture de l'interrupteur primaire SW1 s'obtient en fermant les deuxième et quatrième interrupteurs 48, 54 et/ou en fermant les premier et troisième interrupteurs 46, 52. L'ouverture de l'interrupteur primaire SW1 s'obtient en ouvrant tous les interrupteurs 46, 48, 52, 54 de l'onduleur 36.

De manière analogue, dans l'exemple de réalisation de la figure 3, l'interrupteur secondaire SW2 est formé par les interrupteurs 62, 64, 68, 70 du redresseur 40. La fermeture de l'interrupteur secondaire SW2 s'obtient en fermant les sixième et huitième interrupteur 64, 70 et/ou en fermant les cinquième et septième interrupteur 62, 68. L'ouverture de l'interrupteur secondaire SW2 s'obtient en ouvrant tous les interrupteurs 62, 64, 68, 70 du redresseur 40.

L'onduleur 36 et/ou le redresseur 40 tel que décrit dans l'exemple de réalisation de la figure 3 permet d'offrir une réversibilité de circulation du courant dans le module primaire 20 et/ou dans le module secondaire 22, tout en économisant des composants, l'interrupteur primaire SW1 et/ou l'interrupteur secondaire SW2 étant formés par les interrupteurs de l'onduleur 36 et/ou du redresseur 40, et ne nécessitant pas de composant de commutation additionnel.

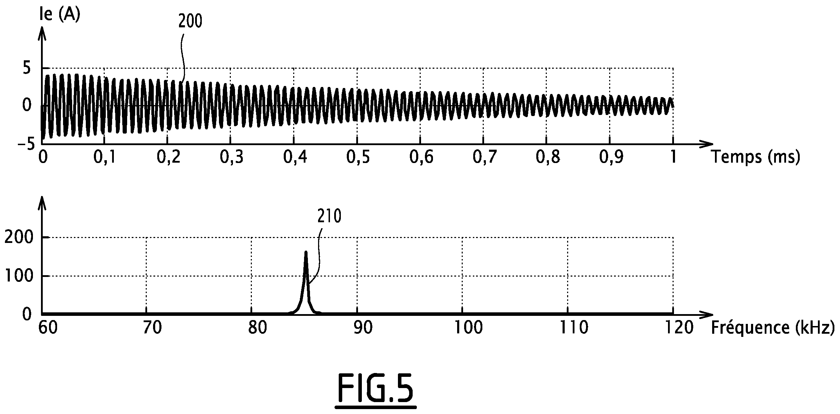

Le fonctionnement de l'ensemble de rechargement par induction 10 selon l'invention, et plus particulièrement du système de conversion d'énergie 18, va être à présent décrit à l'aide de l'organigramme de la figure 4 et des différentes courbes représentées sur les figures 5 à 8.

Lorsque le système de conversion 18 selon l'invention comprend seulement l'interrupteur secondaire SW2, et que le module primaire 20 ne comporte pas d'interrupteur primaire relié au condensateur primaire C1 et à l'enroulement primaire L1, le système de conversion 18 permet au module primaire 20 de détecter la présence ou non du module secondaire 22, et au module secondaire 22 d'émettre des données à destination du module primaire 20. Le module secondaire 22 est alors appelé module d'émission, et le module primaire 20 est appelé module de réception.

En complément, lorsque le système de conversion 18 selon l'invention comprend à la fois l'interrupteur primaire SW1 et l'interrupteur secondaire SW2, le système de conversion 18 permet à chaque module 20, 22 de détecter la présence ou non de l'autre module 22, 20. De manière plus générale, le système de conversion 18 permet alors l'émission de données par un module d'émission choisi parmi le module primaire 20 et le module secondaire 20 à destination d'un module de réception correspondant à l'autre module parmi le module primaire 20 et le module secondaire 22. Autrement dit, le système de conversion 18 permet alors un échange de données selon un premier sens, depuis le module primaire 20 vers le module secondaire 22, ou selon un deuxième sens opposé au premier sens, depuis le module secondaire 22 vers le module primaire 20.

Lors de l'étape initiale 100, visible sur la figure 4, le module d'émission commande son interrupteur parmi l'interrupteur secondaire SW2 et l'interrupteur primaire SW1 dans la configuration correspondante parmi la deuxième configuration et la quatrième configuration, de sorte qu'un signal induit dans l'enroulement parmi l'enroulement secondaire L2 et l'enroulement primaire L1 du module d'émission circulera en boucle fermée à travers ledit enroulement et le condensateur du module d'émission.

Lors de l'étape suivante 110, le module de réception génère une impulsion électrique à travers son enroulement parmi l'enroulement primaire L1 et l'enroulement secondaire L2, et cette impulsion électrique engendre alors un signal électrique induit dans l'enroulement du module d'émission.

Le module d'émission détecte alors, lors de l'étape 120, le signal électrique induit dans son enroulement, ledit signal induit circulant en boucle fermée à travers l'enroulement et le condensateur du module d'émission de par le positionnement de l'interrupteur du module d'émission parmi l'interrupteur secondaire SW2 et l'interrupteur primaire SW1 dans la configuration correspondante parmi la deuxième configuration et la quatrième configuration.

Le module de réception effectue enfin, lors de l'étape 130, une analyse fréquentielle du signal électrique circulant à travers son enroulement pour déterminer la configuration de l'interrupteur du module d'émission parmi l'interrupteur secondaire SW2 et l'interrupteur primaire SW1. Le module de réception détermine alors les données émises par le module d'émission en fonction de la densité spectrale du signal électrique circulant à travers son enroulement.

Sur la figure 5, une courbe 200 représente l'intensité du courant circulant à travers l'enroulement du module de réception parmi l'enroulement primaire L1 et l'enroulement secondaire L2, tel que l'enroulement primaire L1 du module primaire 20, et une courbe 210 représente la densité spectrale de cette intensité, lorsque le module d'émission, tel que le module secondaire 22, n'est pas couplé magnétiquement avec le module de réception ou encore que l'interrupteur du module d'émission parmi l'interrupteur secondaire SW2 et l'interrupteur primaire SW1 est dans la configuration correspondante parmi la première configuration et la troisième configuration. La courbe 200 montre alors que l'intensité du courant circulant à travers l'enroulement du module de réception diminue au cours du temps, et ce courant présente une unique fréquence de résonance sensiblement égale à 85 kHz, comme le montre la courbe 210.

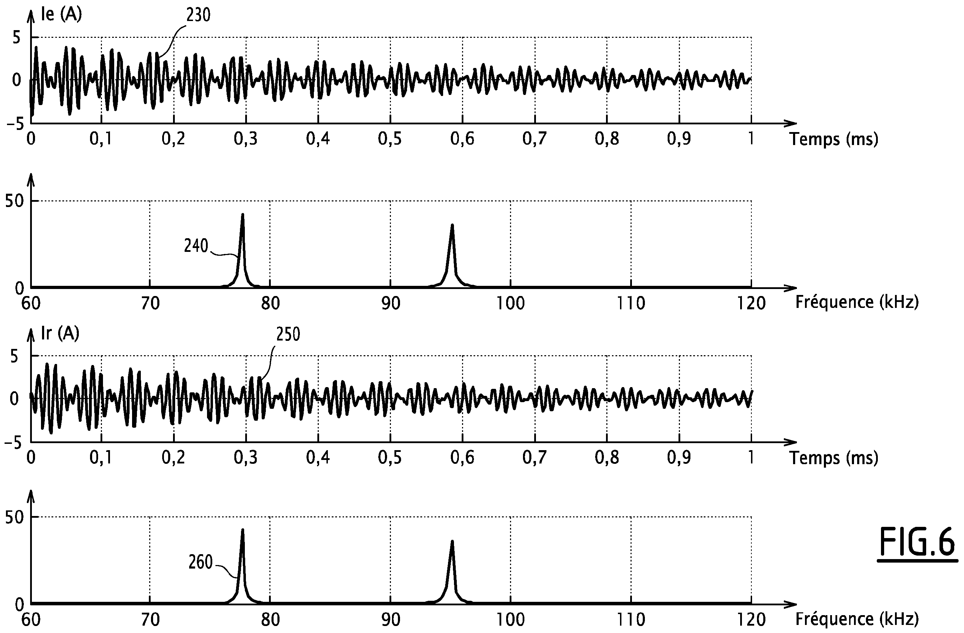

Sur la figure 6, une courbe 230 représente l'intensité du courant circulant à travers l'enroulement du module de réception, et une courbe 240 représente la densité spectrale de cette intensité, lorsque le module d'émission est couplé magnétiquement avec le module de réception et que l'interrupteur du module d'émission est dans la configuration correspondante parmi la deuxième configuration et la quatrième configuration. Une courbe 250 représente l'intensité du courant circulant à travers l'enroulement du module d'émission, et une courbe 260 représente la densité spectrale de cette intensité. Les courbes 230 et 250 montrent que les amplitudes de ces courants oscillent davantage au cours du temps, et que ces courants présentent chacun deux fréquences de résonance sensiblement égales à 78 kHz et 95 kHz, comme le montrent respectivement les courbes 240 et 260.

Ainsi, lorsque le module d'émission a positionné son interrupteur parmi l'interrupteur secondaire SW2 et l'interrupteur primaire SW1 dans la configuration adéquate parmi la deuxième configuration et la quatrième configuration, cette différence relative au nombre de fréquences de résonance permet au module de réception de détecter la présence du module d'émission qui est couplé magnétiquement au module de réception.

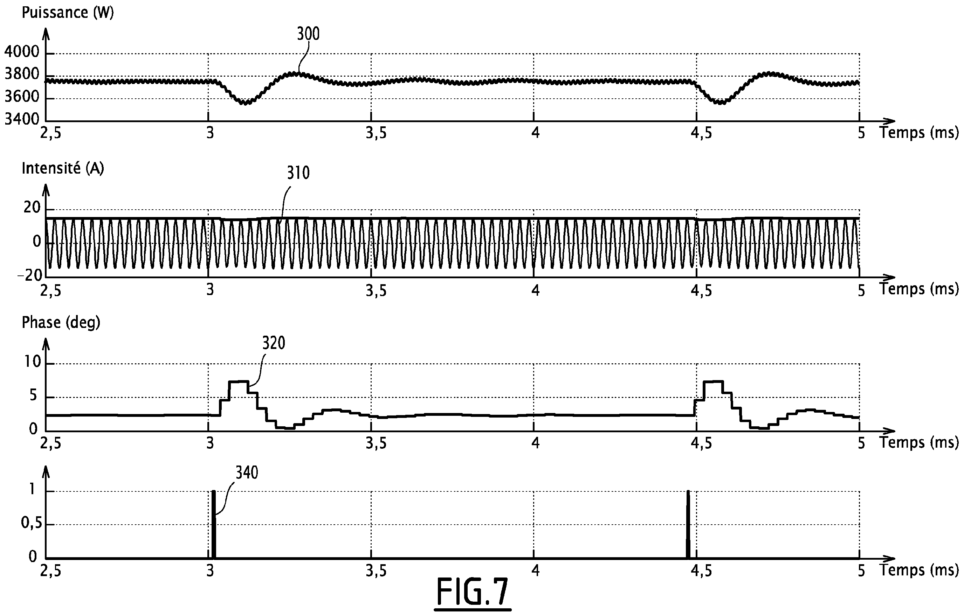

Sur la figure 7, des courbes 300, 310 et 320 représentent respectivement la puissance, l'intensité et la phase du courant circulant dans le module de réception, et une courbe 330 représente un signal de commande de l'interrupteur du module d'émission parmi l'interrupteur secondaire SW2 et l'interrupteur primaire SW1, lors d'une transmission de données depuis le module d'émission vers le module de réception. Le signal de commande de l'interrupteur présente un niveau égal à 1 pour commander l'interrupteur du module d'émission dans la configuration correspondante parmi la deuxième configuration et la quatrième configuration, et un niveau égal à 0 pour commander ledit interrupteur dans la configuration correspondante parmi la première configuration et la troisième configuration.

Pour l'émission de données à destination du module de réception, le signal de commande de l'interrupteur du module d'émission présente alors une impulsion variant de 0 à 1, et cette impulsion est facilement détectable par le module de réception, puisqu'elle engendre une perturbation de courte durée de la puissance, de l'amplitude et également de la phase du courant circulant dans l'enroulement du module de réception, comme cela est visible sur la figure 7 pour les courbes 300, 310 et 320 après chacune des deux impulsions visibles sur la courbe 340.

Le système de conversion 18 selon l'invention permet alors de transmettre des données depuis le module d'émission, comportant l'interrupteur correspondant parmi l'interrupteur secondaire SW2 et l'interrupteur primaire SW1, vers le module de réception sans que cela perturbe la charge de la batterie électrique 12, comme le montrent les courbes 300, 310 et 320 de la figure 7.

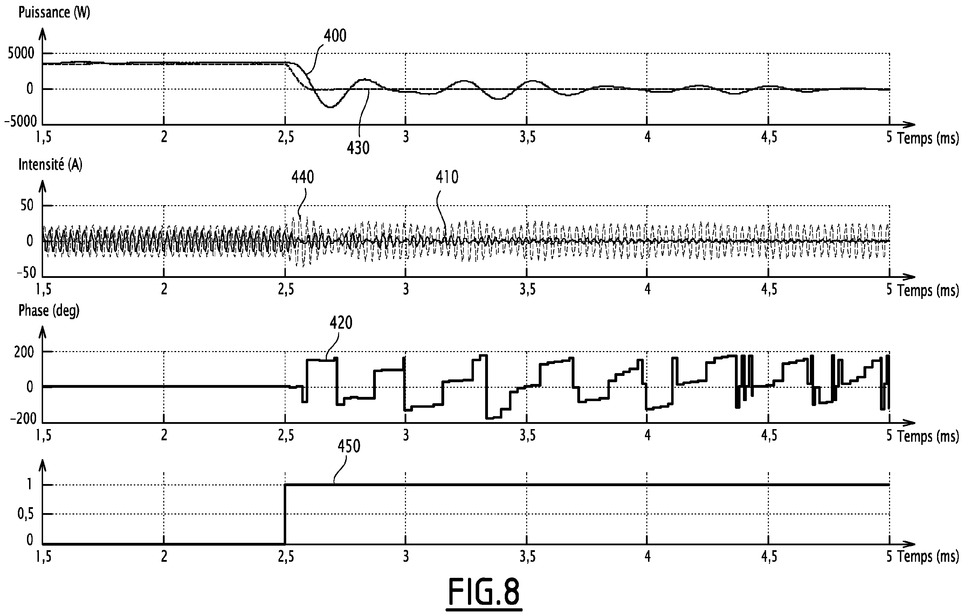

Sur la figure 8, des courbes 400, 410 et 420 représentent respectivement la puissance, l'intensité et la phase du courant circulant dans le module de réception, et des courbes 430 et 440 représentent respectivement la puissance et l'intensité du courant circulant dans le module d'émission. Enfin, une courbe 450 représente le signal de commande de l'interrupteur du module d'émission, tel que l'interrupteur secondaire SW2, lors d'une transmission de données depuis le module d'émission vers le module de réception, en particulier lors d'une requête d'un arrêt d'urgence de la part du module secondaire 22 connecté à la batterie 12. Pour une demande d'arrêt d'urgence, le signal de commande de l'interrupteur ne comporte pas d'impulsion variant de 0 à 1, puis à nouveau à 0, présente un palier égal à 1 pour commander l'interrupteur du module d'émission dans la configuration correspondante parmi la deuxième configuration et la quatrième configuration, telle que la deuxième configuration, à partir du moment où l'arrêt d'urgence est requis.

La demande d'arrêt d'urgence est ainsi une émission particulière d'une donnée à destination du module de réception, le signal de commande de l'interrupteur du module d'émission présente alors un palier à 1, et ce palier est facilement détectable par le module de réception, puisqu'il engendre une chute de l'intensité et des perturbations importantes sur la phase, comme cela est visible sur la figure 8 pour les courbes 410 et 420 après le début du palier à 1 visible sur la courbe 450.

Le système de conversion 18 selon l'invention permet alors, pour le module secondaire 22 connecté à la batterie 12, de requérir auprès du module primaire 20 un arrêt d'urgence de la charge de la batterie 12.

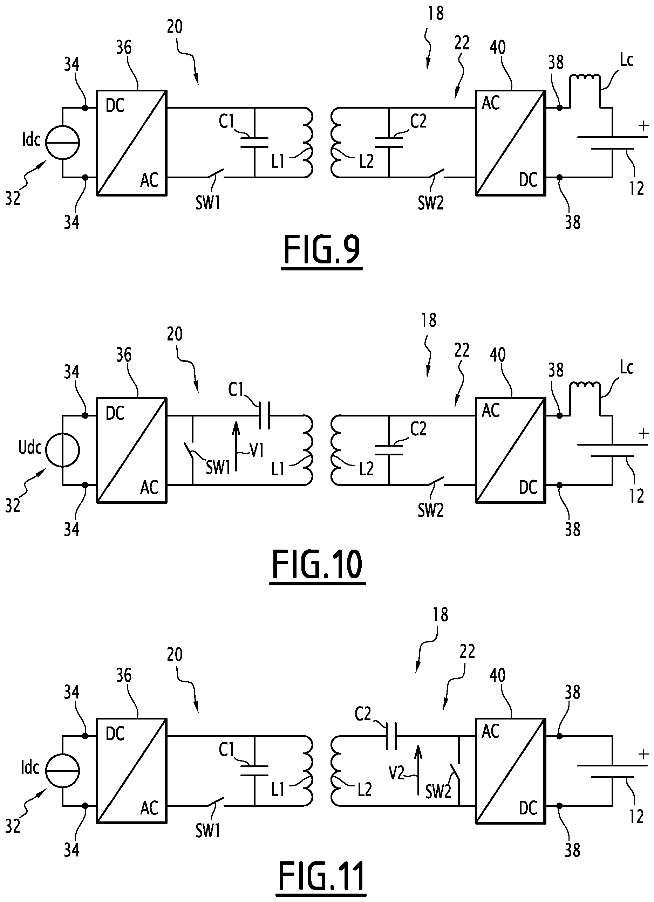

La figure 9 illustre un deuxième mode de réalisation de l'invention pour lequel les éléments identiques au premier mode de réalisation, décrit précédemment, sont repérés par des références identiques.

Selon ce deuxième mode de réalisation, le module primaire 20 est alimenté par une source de courant, le réseau 32 étant propre à délivrer un courant, tel qu'un courant continu Idc, et la charge est également alimentée en courant, une bobine électromagnétique Lc étant connecté en série avec la batterie 12.

Selon ce deuxième mode de réalisation, le système de conversion 18 présente alors un agencement appelé parallèle-parallèle, les condensateurs primaire C1 et secondaire C2 étant connectés en parallèle de l'enroulement primaire L1 et respectivement de l'enroulement secondaire L2.

L'interrupteur secondaire SW2 est alors connecté en série entre l'une des bornes de sortie 38 et une extrémité de l'enroulement secondaire L2, le condensateur secondaire C2 étant connecté en parallèle, d'une part, de l'enroulement secondaire L2, et d'autre part, des bornes de sortie 38.

En complément, l'interrupteur primaire SW1 est connecté en série entre l'une des bornes d'entrée 34 et une extrémité de l'enroulement primaire L1, le condensateur primaire C1 étant connecté en parallèle, d'une part, de l'enroulement primaire L1, et d'autre part, des bornes d'entrée 34.

Le fonctionnement de ce deuxième mode de réalisation est identique à celui du premier mode de réalisation décrit précédemment, et n'est pas décrit à nouveau, un échelon de courant appliqué entre les bornes d'entrée 34 de l'agencement parallèle-parallèle du deuxième mode de réalisation étant équivalent à un échelon de tension appliqué entre les bornes d'entrée 34 de l'agencement série-série du premier mode de réalisation.

Les avantages de ce deuxième mode de réalisation sont identiques à ceux du premier mode de réalisation, décrit précédemment, et ne sont pas décrits à nouveau.

La figure 10 illustre un troisième mode de réalisation de l'invention pour lequel les éléments identiques au premier mode de réalisation, décrit précédemment, sont repérés par des références identiques.

Selon ce troisième mode de réalisation, le module primaire 20 est alimenté par une source de tension, et la charge est alimentée en courant, une bobine électromagnétique Lc étant connecté en série avec la batterie 12.

Selon ce troisième mode de réalisation, le système de conversion 18 présente alors un agencement appelé série-parallèle, le condensateur primaire C1 étant connecté en série de l'enroulement primaire L1 et le condensateur secondaire C2 étant connecté en parallèle de l'enroulement secondaire L2.

L'interrupteur secondaire SW2 est alors connecté en série entre l'une des bornes de sortie 38 et une extrémité de l'enroulement secondaire L2, le condensateur secondaire C2 étant connecté en parallèle, d'une part, de l'enroulement secondaire L2, et d'autre part, des bornes de sortie 38.

En complément, l'interrupteur primaire SW1 est connecté en parallèle, d'une part, de l'enroulement primaire L1 et du condensateur primaire C1 connectés en série, et d'autre part, des bornes d'entrée 34.

Le fonctionnement de ce troisième mode de réalisation est identique à celui du premier mode de réalisation décrit précédemment, et n'est pas décrit à nouveau.

Les avantages de ce troisième mode de réalisation sont identiques à ceux du premier mode de réalisation décrit précédemment, et ne sont pas décrits à nouveau.

La figure 11 illustre un quatrième mode de réalisation de l'invention pour lequel les éléments identiques au premier mode de réalisation, décrit précédemment, sont repérés par des références identiques.

Selon ce quatrième mode de réalisation, le module primaire 20 est alimenté par une source de courant, et la charge est alimentée en tension.

Selon ce quatrième mode de réalisation, le système de conversion 18 présente alors un agencement appelé parallèle-série, le condensateur primaire C1 étant connecté en parallèle de l'enroulement primaire L1 et le condensateur secondaire C2 étant connecté en série de l'enroulement secondaire L2.

L'interrupteur secondaire SW2 est connecté en parallèle, d'une part, de l'enroulement secondaire L2 et du condensateur secondaire C2 connectés en série, et d'autre part, des bornes de sortie 38.

En complément, l'interrupteur primaire SW1 est connecté en série entre l'une des bornes d'entrée 34 et une extrémité de l'enroulement primaire L1, le condensateur primaire C1 étant connecté en parallèle, d'une part, de l'enroulement primaire L1, et d'autre part, des bornes d'entrée 34.

Le fonctionnement de ce quatrième mode de réalisation est identique à celui du premier mode de réalisation décrit précédemment, et n'est pas décrit à nouveau.

Les avantages de ce quatrième mode de réalisation sont identiques à ceux du premier mode de réalisation décrit précédemment, et ne sont pas décrits à nouveau.

On conçoit ainsi que le système de conversion d'énergie 18 selon l'invention, ainsi que l'ensemble associé de rechargement par induction 10, sont moins coûteux et moins encombrants que le système de conversion d'énergie et l'ensemble de rechargement de l'état de la technique puisqu'ils permettent d'effectuer l'appairage du module primaire 2à avec le module secondaire 22, et plus généralement d'échanger des données entre le module primaire 20 et le module secondaire 22, sans nécessiter des modules additionnels de communication radioélectriques.

## Revendications

1. Système (18) de conversion d'énergie électrique, comprenant un module primaire (20) et un module secondaire (22),
le module primaire (20) comportant deux bornes d'entrée (34) propres à recevoir un courant électrique, un enroulement primaire (L1), et un condensateur primaire (C1) relié à l'enroulement primaire (L1) et aux bornes d'entrée (34),
le module secondaire (22) comportant deux bornes de sortie (38), un enroulement secondaire (L2), et un condensateur secondaire (C2) relié à l'enroulement secondaire (L2) et aux bornes de sortie (38),
un courant (I2) étant propre à être induit dans l'enroulement secondaire (L2) lorsque l'enroulement primaire (L1) et l'enroulement secondaire (L2) sont couplés magnétiquement, le courant reçu entre les bornes d'entrée (34) circulant à travers l'enroulement primaire (L1),
**caractérisé en ce que** le module secondaire (22) comprend en outre un interrupteur secondaire (SW2) relié électriquement au condensateur secondaire (C2) et à l'enroulement secondaire (L2), et des moyens de commande de l'interrupteur secondaire (SW2), l'interrupteur secondaire (SW2) étant propre à commuter, de manière réversible, entre une première configuration dans laquelle le courant (I2) induit dans l'enroulement secondaire (L2) est propre à circuler jusqu'aux bornes de sortie (38), et une deuxième configuration dans laquelle ledit courant induit (I2) est propre à circuler en boucle fermée à travers l'enroulement secondaire (L2) et le condensateur secondaire (C2) sans être délivré aux bornes de sortie (38), et
lorsque le module primaire (20) génère une impulsion électrique à travers l'enroulement primaire (L1) pendant que l'interrupteur secondaire (SW2) est dans la deuxième configuration, le module primaire (20) est configuré pour détecter la présence du module secondaire (22) via un nombre de fréquences de résonance d'un courant circulant dans l'enroulement primaire (L1).

2. Système de conversion (18) selon la revendication 1, dans lequel l'interrupteur secondaire (SW2) est connecté en parallèle, d'une part, de l'enroulement secondaire (L2) et du condensateur secondaire (C2) connectés en série, et d'autre part, des bornes de sortie (38).

3. Système de conversion (18) selon la revendication 1, dans lequel l'interrupteur secondaire (SW2) est connecté en série entre l'une des bornes de sortie (38) et une extrémité de l'enroulement secondaire (L2), le condensateur secondaire (C2) étant connecté en parallèle, d'une part, de l'enroulement secondaire (L2), et d'autre part, des bornes de sortie (38).

4. Système de conversion (18) selon l'une quelconque des revendications précédentes, dans lequel le système de conversion (18) est réversible, un courant (I1) étant propre à être induit dans l'enroulement primaire (L1) lorsque l'enroulement primaire (L1) et l'enroulement secondaire (L2) sont couplés magnétiquement et qu'un courant reçu entre les bornes de sortie (38) circule à travers l'enroulement secondaire (L2),
dans lequel le module primaire (20) comprend en outre un interrupteur primaire (SW1) relié électriquement au condensateur primaire (C1) et à l'enroulement primaire (L1), et des moyens de commande de l'interrupteur primaire (SW1), l'interrupteur primaire (SW1) étant propre à commuter, de manière réversible, entre une troisième configuration dans laquelle le courant (I1) induit dans l'enroulement primaire (L1) est propre à circuler jusqu'aux bornes d'entrée (34), et une quatrième configuration dans laquelle ledit courant induit (I1) est propre à circuler en boucle fermée à travers l'enroulement primaire (L1) et le condensateur primaire (C1) sans être délivré aux bornes d'entrée (34).

5. Système de conversion (18) selon la revendication 4, dans lequel l'interrupteur primaire (SW1) est connecté en parallèle, d'une part, de l'enroulement primaire (L1) et du condensateur primaire (C1) connectés en série, et d'autre part, des bornes d'entrée (34).

6. Système de conversion (18) selon la revendication 4, dans lequel l'interrupteur primaire (SW1) est connecté en série entre l'une des bornes d'entrée (34) et une extrémité de l'enroulement primaire (L1), le condensateur primaire (C1) étant connecté en parallèle, d'une part, de l'enroulement primaire (L1), et d'autre part, des bornes d'entrée (34).

7. Système de conversion (18) selon l'une quelconque des revendications précédentes, dans lequel le système de conversion (18) est propre à convertir une énergie continue en une autre énergie continue,
dans lequel le module primaire (20) comporte un onduleur (36) connecté entre les bornes d'entrée (34) et l'enroulement primaire (L1), et
dans lequel le module secondaire (22) comporte un redresseur (40) connecté entre l'enroulement secondaire (L2) et les bornes de sortie (38).

8. Ensemble (10) de rechargement par induction d'une batterie électrique (12), l'ensemble (10) comprenant un dispositif de rechargement par induction (14) et un véhicule électrique (16), le véhicule électrique (16) comportant la batterie électrique (12),
**caractérisé en ce qu'**il comprend un système de conversion d'énergie (18) conforme à l'une quelconque des revendications précédentes, le dispositif de rechargement par induction (14) comportant le module primaire (20), le véhicule électrique (16) comportant le module secondaire (22), les bornes d'entrées (34) étant propres à être connectées à une source d'alimentation électrique (32) et les bornes de sortie (38) étant propres à être connectées à la batterie électrique (12).

9. Procédé d'émission de données par un module d'émission (22 ; 20) à destination d'un module de réception (20; 22), au sein d'un ensemble (10) de rechargement par induction d'une batterie électrique (12), l'ensemble (10) étant conforme à la revendication 8,
le procédé étant **caractérisé en ce qu'**il comprend les étapes suivantes, mises en œuvre par le module d'émission (22 ; 20) choisi parmi le module primaire (20) et le module secondaire (22) :
- la commande (100) de l'interrupteur du module d'émission (22 ; 20)parmi l'interrupteur secondaire et l'interrupteur primaire (SW2 ; SW1), dans la configuration correspondante à une mise en boucle fermée de l'enroulement et du condensateur correspondant,
- la détection (120) d'un signal électrique (I2 ; I1) induit dans l'enroulement (L2 ; L1) du module d'émission (22 ; 20) suite à la génération (110) d'au moins une impulsion électrique entre les bornes (34 ; 38) du module de réception (20 ; 22), le module de réception (20 ; 22) correspondant à l'autre module parmi le module primaire (20) et le module secondaire (22), ledit signal induit (I2 ; I1) circulant en boucle fermée à travers l'enroulement (L2 ; L1) et le condensateur (C2 ; C1) du module d'émission (22 ; 20).

10. Procédé de réception de données par un module de réception (20 ; 22) depuis un module d'émission (22 ; 20), au sein d'un ensemble (10) de rechargement par induction d'une batterie électrique (12), l'ensemble (10) étant conforme à la revendication 8,
le procédé étant **caractérisé en ce qu'**il comprend les étapes suivantes, mises en œuvre par le module de réception (20 ; 22) choisi parmi le module primaire (20) et le module secondaire (22) :
- la génération (110) d'au moins une impulsion électrique entre les bornes (34 ; 38) du module de réception (20 ; 22), et
- l'analyse fréquentielle (130) d'un signal électrique (I1 ; I2) circulant à travers l'enroulement (L1 ; L2) du module de réception (20 ; 22) suite à l'impulsion générée entre les bornes (34 ; 38) du module de réception (20 ; 22), pour déterminer la configuration de l'interrupteur parmi l'interrupteur secondaire et l'interrupteur primaire (SW2 ; SW1) du module d'émission, le module d'émission (22 ; 20) correspondant à l'autre module parmi le module primaire (20) et le module secondaire (22).

## Patentansprüche

1. System (18) zur Umwandlung elektrischer Energie, aufweisend ein Primärmodul (20) und ein Sekundärmodul (22),
wobei das Primärmodul (20) zwei Eingangsanschlüsse (34), die zum Empfangen eines elektrischen Stroms geeignet sind, eine Primärwicklung (L1) und einen Primärkondensator (C1) aufweist, der mit der Primärwicklung (L1) und den Eingangsanschlüssen (34) verbunden ist,
wobei das Sekundärmodul (22) zwei Ausgangsanschlüsse (38), eine Sekundärwicklung (L2) und einen Sekundärkondensator (C2) aufweist, der mit der Sekundärwicklung (L2) und den Ausgangsanschlüssen (38) verbunden ist,
wobei ein Strom (I2) in der Sekundärwicklung (L2) induziert werden kann, wenn die Primärwicklung (L1) und die Sekundärwicklung (L2) magnetisch gekoppelt sind, wobei der zwischen den Eingangsanschlüssen (34) empfangene Strom durch die Primärwicklung (L1) fließt,
**dadurch gekennzeichnet, dass** das Sekundärmodul (22) ferner einen Sekundärschalter (SW2) aufweist, der elektrisch mit dem Sekundärkondensator (C2) und der Sekundärwicklung (L2) verbunden ist, und Mittel zum Steuern des Sekundärschalters (SW2) aufweist, wobei der Sekundärschalter (SW2) reversibel zwischen einer ersten Konfiguration, in der der in der Sekundärwicklung (L2) induzierte Strom (I2) zu den Ausgangsanschlüssen (38) fließen kann, und einer zweiten Konfiguration, in der der induzierte Strom (I2) in einem geschlossenen Kreislauf durch die Sekundärwicklung (L2) und den Sekundärkondensator (C2) fließen kann, ohne an die Ausgangsanschlüsse (38) abgegeben zu werden, schalten kann und
dass, wenn das Primärmodul (20) einen elektrischen Stromstoß in Richtung der Primärwicklung (L1) erzeugt, während der Sekundärschalter (SW2) in der zweiten Konfiguration ist, das Primärmodul (20) eingerichtet ist, das Vorhandensein des Sekundärmoduls (22) über eine Anzahl von Resonanzfrequenzen eines Stroms, der in der Primärwicklung (L1) fließt, zu detektieren.

2. Umwandlungssystem (18) nach Anspruch 1, bei dem der Sekundärschalter (SW2) parallel geschaltet ist einerseits zu der Sekundärwicklung (L2) und zu dem Sekundärkondensator (C2), die in Reihe geschaltet sind, und andererseits zu den Ausgangsanschlüssen (38).

3. Umwandlungssystem (18) nach Anspruch 1, wobei der Sekundärschalter (SW2) in Reihe zwischen einem der Ausgangsanschlüsse (38) und einem Ende der Sekundärwicklung (L2) geschaltet ist, wobei der Sekundärkondensator (C2) parallel geschaltet ist einerseits zur Sekundärwicklung (L2) und andererseits zu den Ausgangsanschlüssen (38).

4. Umwandlungssystem (18) nach einem der vorhergehenden Ansprüche, wobei das Umwandlungssystem (18) reversibel ist, wobei ein Strom (I1) in der Primärwicklung (L1) induziert werden kann, wenn die Primärwicklung (L1) und die Sekundärwicklung (L2) magnetisch gekoppelt sind und ein zwischen den Ausgangsanschlüssen (38) empfangener Strom durch die Sekundärwicklung (L2) fließt,
wobei das Primärmodul (20) ferner einen Primärschalter (SW1), der elektrisch mit dem Primärkondensator (C1) und der Primärwicklung (L1) verbunden ist, und Mittel zum Steuern des Primärschalters (SW1) aufweist, wobei der Primärschalter (SW1) reversibel schalten kann, zwischen einer dritten Konfiguration, in der der in der Primärwicklung (L1) induzierte Strom (I1) zu den Eingangsanschlüssen (34) fließen kann, und einer vierten Konfiguration, in der der induzierte Strom (I1) in einem geschlossenen Kreislauf durch die Primärwicklung (L1) und den Primärkondensator (C1) fließen kann, ohne an die Eingangsanschlüsse (34) abgegeben zu werden.

5. Umwandlungssystem (18) nach Anspruch 4, bei dem der Primärschalter (SW1) parallel geschaltet ist einerseits zu der Primärwicklung (L1) und dem Primärkondensator (C1), die in Reihe geschaltet sind, und andererseits zu den Eingangsanschlüssen (34).

6. Umwandlungssystem (18) nach Anspruch 4, wobei der Primärschalter (SW1) in Reihe zwischen einem der Eingangsanschlüsse (34) und einem Ende der Primärwicklung (L1) geschaltet ist, wobei der Primärkondensator (C1) parallel geschaltet ist einerseits zur Primärwicklung (L1) und andererseits zu den Eingangsanschlüssen (34).

7. Umwandlungssystem (18) nach einem der vorhergehenden Ansprüche, wobei das Umwandlungssystem (18) geeignet ist, eine kontinuierliche Energie in eine andere kontinuierliche Energie umzuwandeln,
wobei das Primärmodul (20) einen Wechselrichter (36) aufweist, der zwischen die Eingangsanschlüsse (34) und die Primärwicklung (L1) geschaltet ist, und
wobei das Sekundärmodul (22) einen Gleichrichter (40) aufweist, der zwischen die Sekundärwicklung (L2) und die Ausgangsanschlüsse (38) geschaltet ist.

8. Anordnung (10) zum Induktionsladen einer elektrischen Batterie (12), wobei die Anordnung (10) eine Induktionsladevorrichtung (14) und ein Elektrofahrzeug (16) aufweist, wobei das Elektrofahrzeug (16) die elektrische Batterie (12) aufweist,
**dadurch gekennzeichnet, dass** es ein Energieumwandlungssystem (18) gemäß einem der vorhergehenden Ansprüche aufweist, wobei die Induktionsladevorrichtung (14) das Primärmodul (20) aufweist, wobei das Elektrofahrzeug (16) das Sekundärmodul (22) aufweist, wobei die Eingangsanschlüsse (34) geeignet sind, an eine Energieversorgungsquelle (32) angeschlossen zu werden und die Ausgangsanschlüsse (38) geeignet sind, an die elektrische Batterie (12) angeschlossen zu werden.

9. Verfahren zum Übertragen von Daten durch ein Sendemodul (22; 20) an ein Empfangsmodul (20; 22) innerhalb einer Anordnung (10) zum Induktionsladen einer elektrischen Batterie (12), wobei die Anordnung (10) gemäß Anspruch 8 ausgestaltet ist,
wobei das Verfahren **dadurch gekennzeichnet ist, dass** es die folgenden Schritte aufweist, die durch das Sendemodul (22; 20) ausgeführt werden, das aus dem Primärmodul (20) und dem Sekundärmodul (22) ausgewählt ist:
- die Steuerung (100) des Schalters des Empfangsmoduls unter dem Sekundärschalter und dem Primärschalter (SW2; SW1) in die Konfiguration, die einem geschlossenen Kreis der Wicklung und des entsprechenden Kondensators entspricht,
- das Erfassen (120) eines elektrischen Signals (I2; I1), das in der Wicklung (L2; L1) des Sendemoduls (22; 20) nach dem Erzeugen (110) mindestens eines elektrischen Stromstoßes zwischen den Anschlüssen (34; 38) des Empfangsmoduls (20; 22) induziert wird, wobei das Empfangsmodul (20; 22) dem anderen Modul unter dem Primärmodul (20) und dem Sekundärmodul (22) entspricht, wobei das induzierte Signal (I2; I1) im geschlossenen Kreis durch die Wicklung (L2; L1) und den Kondensator (C2; C1) des Sendemoduls (22; 20) fließt.

10. Verfahren zum Empfangen von Daten durch ein Empfangsmodul (20; 22) von einem Sendemodul (22; 20) innerhalb einer Anordnung (10) zum Induktionsladen einer elektrischen Batterie (12), wobei die Anordnung (10) gemäß Anspruch 8 ausgestaltet ist,
wobei das Verfahren **dadurch gekennzeichnet ist, dass** es die folgenden Schritte aufweist, die durch das Empfangsmodul (20; 22) ausgeführt werden, das aus dem Primärmodul (20) und dem Sekundärmodul (22) ausgewählt ist:
- die Erzeugung (110) mindestens eines elektrischen Stromstoßes zwischen den Anschlüssen (34; 38) des Empfangsmoduls (20; 22) und
- die Frequenzanalyse (130) eines elektrischen Signals (I1; I2), das durch die Wicklung (L1; L2) des Empfangsmoduls (20; 22) nach dem Stromstoß fließt, der zwischen den Anschlüssen (34; 38) des Empfangsmoduls (20; 22) erzeugt wird, um die Konfiguration des Schalters unter dem Sekundärschalter und dem Primärschalter (SW2; SW1) des Sendemoduls zu bestimmen, wobei das Sendemodul (22; 20) dem anderen Modul unter dem Primärmodul (20) und dem Sekundärmodul (22) entspricht.

## Claims

1. A electric energy conversion system (18), comprising a primary module (20) and a secondary module (22),
the primary module (20) including two input terminals (34) capable of receiving electric current, a primary winding (L1), and a primary capacitor (C1) connected to the primary winding (L1) and the input terminals (34),
the secondary module (22) including two output terminals (38), a secondary winding (L2), and a secondary capacitor (C2) connected to the secondary winding (L2) and the output terminals (38),
a current (12) being able to be induced in the secondary winding (L2) when the primary winding (L1) and the secondary winding (L2) are magnetically coupled, the current received between the input terminals (34) flowing through the primary winding (L1),
**characterized in that** the secondary module (22) further comprises a secondary switch (SW2) electrically connected to the secondary capacitor (C2) and to the secondary winding (L2), and means for controlling the secondary switch (SW2), the secondary switch (SW2) being able to switch, reversibly, between a first configuration in which the current (12) induced in the secondary winding (L2) is able to flow up to the output terminals (38), and a second configuration in which said induced current (12) is able to flow in a closed loop through the secondary winding (L2) and the secondary capacitor (C2) without being delivered to the output terminals (38), and
when the primary module (20) generates an electrical pulse through the primary winding (L1) while the secondary switch (SW2) is in the second configuration, the primary module (20) is configured to detect the presence of the secondary module (22) via a number of resonance frequencies of a current flowing in the primary winding (L1).

2. The conversion system (18) according to claim 1, wherein the secondary switch (SW2) is connected in parallel on the one hand with the secondary winding (L2) and the secondary capacitor (C2) connected in series, and on the other hand with the output terminals (38).

3. The conversion system (18) according to claim 1, wherein the secondary switch (SW2) is connected in series between one of the output terminals (38) and one end of the secondary winding (L2), the secondary capacitor (C2) being connected in parallel with the secondary winding (L2) on the one hand, and with the output terminals (38) on the other hand.

4. The conversion system (18) according to any one of the preceding claims, wherein the conversion system (18) is reversible, a current (11) being able to be induced in the primary winding (L1) when the primary winding (L1) and the secondary winding (L2) are magnetically coupled and a current received between the output terminals (38) flows through the secondary winding (L2),
wherein the primary module (20) further comprises a primary switch (SW1) electrically connected to the primary capacitor (C1) and to the primary winding (L1), and means for controlling the primary switch (SW1), the primary switch (SW1) being able to switch, reversibly, between a third configuration, in which the current (11) induced in the primary winding (L1) is able to flow up to the input terminals (34), and a fourth configuration, in which said induced current (11) is able to flow in a closed loop through the primary winding (L1) and the primary capacitor (C1) without being delivered to the input terminals (34).

5. The conversion system (18) according to claim 4, wherein the primary switch (SW1) is connected in parallel on the one hand with primary winding (L1) and the primary capacitor (C1) connected in series, and on the other hand with the input terminals (34).

6. The conversion system (18) according to claim 4, wherein the primary switch (SW1) is connected in series between one of the input terminals (34) and one end of the primary winding (L1), the primary capacitor (C1) being connected in parallel with the primary winding (L1) on the one hand, and with the input terminals (34) on the other hand.

7. The conversion system (18) according to any one of the preceding claims, wherein the conversion system (18) is able to convert one direct energy into another direct energy,
wherein the primary module (20) includes an inverter (36) connected between the input terminals (34) and the primary winding (L1), and
wherein the secondary module (22) includes a rectifier (40) connected between the secondary winding (L2) and the output terminals (38).

8. An induction recharging assembly (10) for an electric battery (12), the assembly (10) comprising an induction recharging device (14) and an electric vehicle (16), the electric vehicle (16) including the electric battery (12),
**characterized in that** it comprises an energy conversion system (18) according to any one of the preceding claims, the induction recharging device (14) including the primary module (20), the electric vehicle (16) including the secondary module (22), the input terminals (34) being able to be connected to a power supply source (32) and the output terminals (38) being able to be connected to the electric battery (12).

9. A method for transmitting data by a transmission module (22; 20) to a receiving module (20; 22), within an induction recharging assembly (10) for an electric battery (12), the assembly (10) being according to claim 8,
the method being **characterized in that** it comprises the following steps, carried out by the transmission module (22; 20) chosen from among the primary module (20) and the secondary module (22):
- controlling (100) the switch of the transmission module (22; 20) among the secondary switch and the primary switch (SW2; SW1), in the configuration corresponding to a closed loop of the winding and the corresponding capacitor,
- detecting (120) an electric signal (12; 11) induced in the winding (L2; L1) of the transmission module (22; 20) following the generation (110) of at least one electric pulse between the terminals (34; 38) of the receiving module (20; 22), the receiving module (20; 22) corresponding to the other module among the primary module (20) and the secondary module (22), said induced signal (12; 11) flowing in the closed loop through the winding (L2; L1) and the capacitor (C2; C1) of the transmission module (22; 20).

10. A method for receiving data by a receiving module (20; 22) from a transmission module (22; 20), within an induction recharging assembly (10) for an electric battery (12), the assembly (10) being according to claim 8,
the method being **characterized in that** it comprises the following steps, carried out by the receiving module (20; 22) chosen from among the primary module (20) and the secondary module (22):
- generating (110) at least one electric pulse between the terminals (34; 38) of the receiving module (20; 22), and
- performing (130) a frequency analysis of an electric signal (11; 12) flowing through the winding (L1; L2) of the receiving module (20; 22) following the pulse generated between the terminals (34; 38) of the receiving module (20; 22), in order to determine the configuration of the switch from among the secondary switch and the primary switch (SW2; SW1) of the transmission module, the transmission module (22; 20) corresponding to the other module among the primary module (20) and the secondary module (22).
